# EUROPEAN PATENT SPECIFICATION

(11) **EP 2 050 617 B1**
(45) Date of publication and mention of the grant of the patent: **09.12.2015**
(21) Application number: 07425651.2
(22) Date of filing: 17.10.2007
(51) Int. Cl.: B60N 2/66

(54) **Backrest of a vehicle seat**
Rückenlehne eines Fahrzeugsitzes
Dossier pour siège de véhicule

(43) Date of publication of application: 22.04.2009
(73) Proprietor: ELASIS - Società Consortile per Azioni, 80038 Pomigliano d'Arco (IT)
(72) Inventor: Sellitto, Giuseppe, 80038 Pomigliano d'Arco (IT); Porreca, Natale, 80038 Pomigliano d'Arco (IT); Dal Monte, Antonio, 80038 Pomigliano d'Arco (IT)
(74) Representative: Bergadano, Mirko

(56) References cited:
- EP-A- 0 540 481
- WO-A-2005/108157
- WO-A-2006/046719

## Description

The present invention relates to a backrest of a vehicle seat.

As is known, to make the seats of motor vehicles comfortable, the backrest is provided with a lumbar supporting device. The lumbar supporting device generally comprises a supporting member, which is coupled to a supporting frame of the backrest and defines a shaped front surface arranged at the height of the lumbosacral region of the body of the occupant of the seat.

The lumbar supporting device also comprises an adjustment device that can be operated by the user to adjust the shape and/or position of the supporting member to fit the contours of the body. For example, in European patent EP540481, the adjustment device comprises two Bowden cables, each of which consists of a relative metal wire, fixed at the end thereof to the frame of the backrest, and a relative sheath, one end of which is connected to the supporting member by means of a corresponding L-shaped formation. The L-shaped formations constitute reaction and anchorage elements for the ends of the sheaths and are mounted on respective rivets, which pass through corresponding apertures in brackets fixed to the supporting member.

The need is felt to improve this lumbar supporting device known in the prior art, in order to contribute to the safety of the occupant of the seat in case of a vehicle collision from the rear, in particular to limit the so-called "whiplash" effect on the neck during the accident.

The purpose of the present invention is to provide a backrest of a vehicle seat, which satisfies the need described above in a simple and cost-effective manner.

According to the present invention a backrest of a vehicle seat is provided, as defined in claim 1.

According to the present invention also a lumbar supporting device is provided, as defined in claim 11.

In order to better understand the present invention, a non-limiting preferred embodiment thereof will now be described by mere way of example with reference to the accompanying drawings, in which:
- Figure 1 is a perspective rear view of the backrest of a vehicle seat according to the present invention, in which some parts have been removed for the sake of clarity;
- Figure 2 is similar to Figure 1 and shows the backrest in a different operating condition;
- Figure 3 is a schematic rear view of a detail of the backrest in Figures 1 and 2;
- Figure 4 is a schematic side view that shows the seat in Figures 1 and 2 with a user during an accident;
- Figure 5 is similar to Figure 3 and shows an alternative embodiment of the detail in Figure 3;
- Figures 6 and 7 are schematic plan views of a further embodiment of the backrest according to the present invention, in two different operating conditions;
- Figures 8 and 9 show cross-sectional views of a component of the backrest in Figures 6 and 7, in the operating conditions shown respectively in Figures 6 and 7.

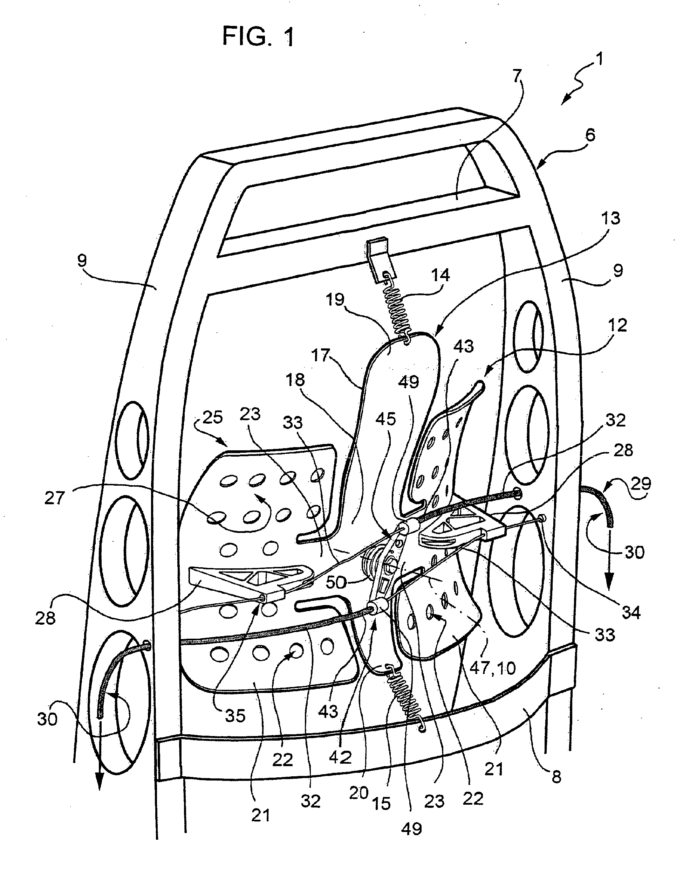

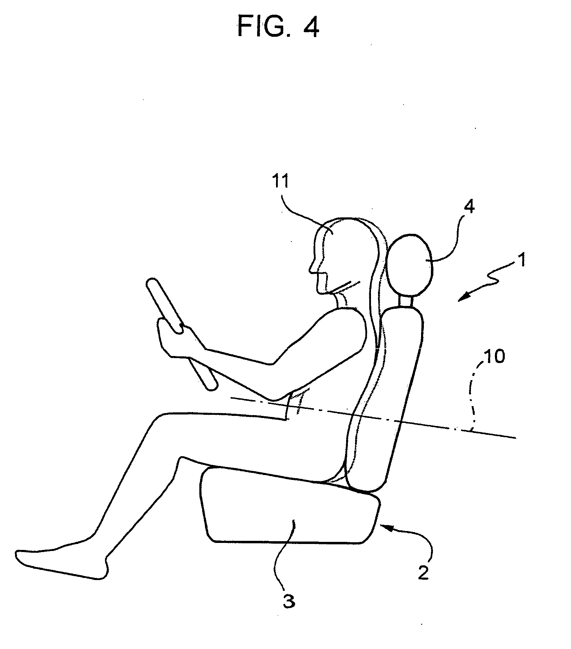

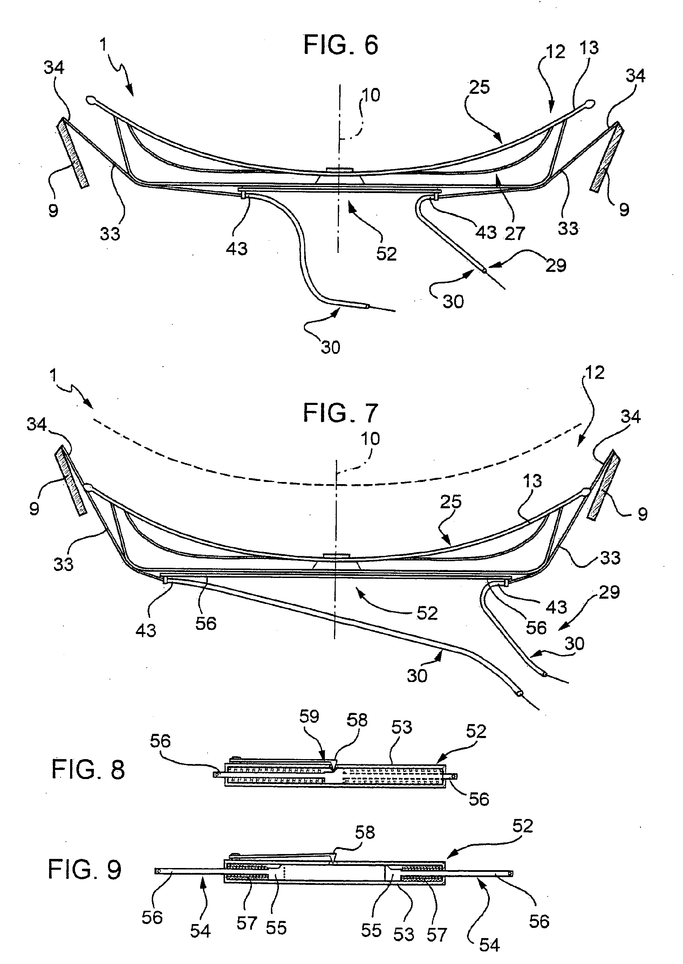

In Figures 1 and 4, reference number 1 indicates a backrest of a vehicle seat 2. The backrest 1 is connected to a seat area 3 of the seat 2 in a known way that is not described in detail, it is fitted with a headrest 4, and comprises a covering, a padding material (not illustrated), and an internal frame 6. The frame 6 comprises an upper cross member 7 and a lower cross member 8 which are substantially horizontal, and two lateral uprights 9. In particular, the uprights 9, seen from the top, have a backwardly converging profile, considering a longitudinal direction 10 of support for the back of a user 11 against the backrest 1. In other words, the front edges of the uprights 9 are further apart from one another than the rear edges (as is also illustrated in the solution in Figures 6 and 7).

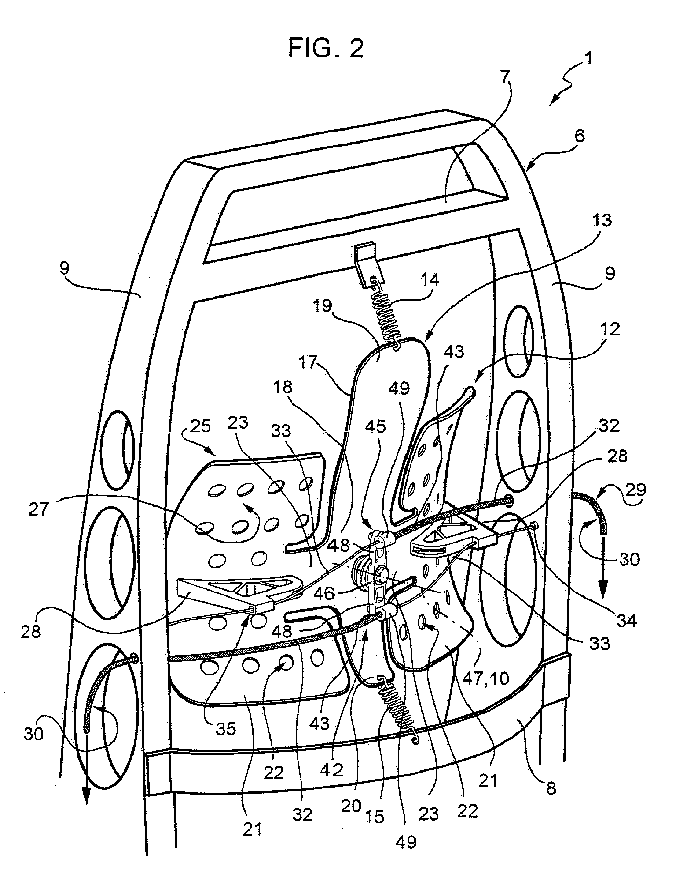

With reference to Figures 1 and 2, the backrest 1 comprises a lumbar supporting device 12, which, in turn, comprises an internal supporting member 13, which is movably attached to the frame 6. In particular, the supporting member 13 is connected to the cross members 7 and 8 by means of respective elastic elements 14 and 15, for example defining coil springs, and consists of a plate made out of a single piece of plastic material and having an external perimeter that is substantially butterfly shaped. The plate 13 comprises a vertically elongated band 17 that in turn comprises an intermediate portion 18, an upper appendix 19 hooked to the elastic element 14, and a lower appendix 20 hooked to the elastic element 15. The plate 13 also comprises two flanges 21, which are arranged on opposite sides of the band 17, are provided with a series of lightening holes 22, and are joined to the portion 18 by means of respective portions 23, the dimensions of which are smaller than those of the other portions of the plate 13 to make the flanges 21 flexible in relation to the band 17.

The plate 13 has a front surface 25 that is concave and shaped so as to ergonomically support a part of the back of a user 11. The plate 13 has a rear surface 27 provided with two cantilevered ribs 28, which are fixed, respectively, to the flanges 21 and lie on a same plane.

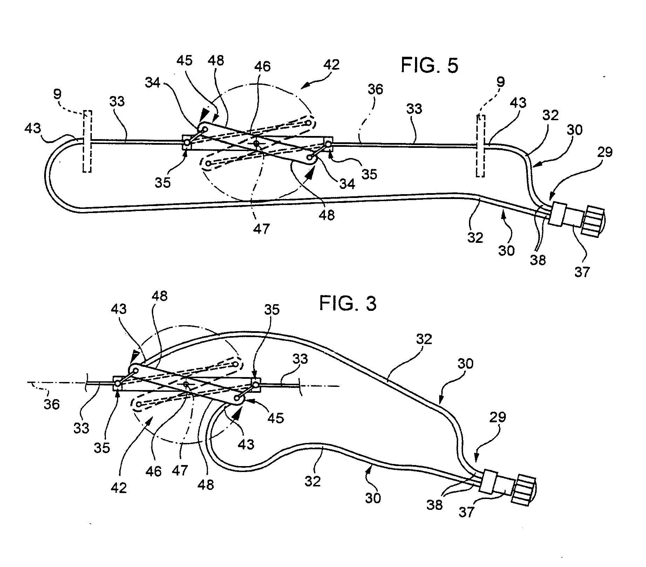

The device 12 also comprises an adjustment assembly 29, which in turn comprises two Bowden cables 30 consisting of respective sheaths 32 and respective cores (visible, for example, in Figures 6 and 7). The cores are slidably mounted in the sheaths 32 and comprise respective wire sections 33 outside the sheaths 32. The wire sections 33 are fixed, at their ends 34, to the uprights 9 in positions symmetrical to one another, in a way that is not described in detail, and slidingly engage respective cable guides 35, provided on the surface 27, which are symmetrical to one another in relation to a longitudinal vertical plane passing through the center-line of the backrest 1, lie on a same plane, and are fixed in relation to the flanges 21. Therefore, the wire sections 33 support the flanges 21 and hold the plate 13 in the correct position in relation to the vertical longitudinal plane. In particular, the cable guides 35 are obtained in the ribs 28 and define a sliding direction 36 of the wire sections 33, which seen from the back is horizontal (Figure 3).

With reference to Figure 3, the assembly 29 comprises a control device 37 of a known type, which is connected to the Bowden cables 30 at one end 38 opposite to the ends 34. The device 37 can be operated by the user 11 to pull/release the wire sections 33 in relation to the sheaths 32, in order to alter the length of the wire sections 33 and thus modify the shape and/or position of the surface 25 in relation to the uprights 9 according to the ergonomic requirements of the user 11.

The assembly 29 also comprises a connecting device 42, which holds one end 43 of the sheaths 32 movably connected to the surface 27. The end 43 of each sheath 32 is opposite the end 38, is associated to a relative wire section 33 and, thanks to the device 42, is able to move in relation to the surface 27 starting from a reference position (shown in Figure 1 and, by the dashed line, in Figure 3) towards the portion of the frame 6 to which the corresponding wire section 33 is connected, up to an end-of-travel position, illustrated in Figure 3 by the continuous line.

In the particular example that is described, the device 42 comprises a rocker arm 45, preferably made of aluminum or steel and comprising a central portion 46 that is pivotally connected to the portion 18 so as to rotate about an axis 47 that coincides with the direction 10. The rocker arm 45 has two opposite arms 48, the ends of which are connected to the ends 43 of the sheaths 32 via respective pawl elements 49. The elements 49 allow the cores to slide, they are pivotally connected to the arms 48 in a way that is not illustrated, so as to be able to rotate idly about respective axes parallel to the axis 47, and constitute the points of attachment of the ends 43 to the surface 27. As the rocker arm 45 rotates, each end 43 follows a circular path along the surface 27. Said circular path has a straight main component substantially in the direction 36, and a secondary component that tends to be cancelled when the arms 48 have moved beyond a dead center position in which they are at right angles to the direction 36 (Figure 2).

The freedom of movement of the ends 43 is such that the wire sections 33 are slackened and, thus, the plate 13 is free to move backwards in relation to the arrangement assumed when the ends 43 are in their reference position. In this way, as illustrated in Figure 4, the device 42 constitutes a safety system that allows the plate 13 to move backwards in the space between the uprights 9 and the cross members 7 and 8 when the user 11 exerts a longitudinal inertial force against the surface 25 in case of a vehicle collision from the rear.

The device 42 comprises an elastic member 50, defined in particular by a coil spring wound round the hinge axis 47 of the rocker arm 45, and is arranged so as to make the rocker arm 45 rotate in a clockwise direction in the Figures from 1 to 3, that is towards the reference position of the ends 43. The elastic action of the spring 50, defined by its rigidity and preloading, if any, is overcome when a longitudinal force against the surface 25 exceeds a previously defined threshold value, corresponding to inertial forces against the backrest 1 in case of a vehicle collision from the rear. Therefore, the spring 50 performs both a retaining action, to hold the ends 43 in the reference position in normal running conditions until the longitudinal inertial force of the user 11 exceeds a previously defined threshold value, and also a returning action to move the rocker arm 45 back when said force is no longer applied.

The spring 50 is sufficiently rigid and/or preloaded to limit the rotation of the rocker arm 45 and, thus to limit the movement of the ends 43 when the device 37 is operated to adjust the position and/or shape of the surface 25. In particular, during said adjustment, the rocker arm 45 rotates by a maximum of 30° with respect to the horizontal axis. In practice, the reference position of the ends 43, that is the position of the rocker arm 45 in normal running conditions, is reached at the end of the adjustment performed using the device 37.

In case of a vehicle collision from the rear, the longitudinal inertial force of the user against the surface 25 tensions the wire sections 33, so that a consequential torque is exerted on the rocker arm 45 in an anti-clockwise direction (Figure 3). Said torque also depends on the angular position of the rocker arm 45, in that the lever arm varies with respect to the direction 36. When the action of the spring 50 is exceeded and the rocker arm 45 rotates until it exceeds the dead center position in which it is at right angles to the direction 36 (Figure 2), the rocker arm 45 is released, and turns further until it reaches the end-of-travel position and allows the plate 13 maximum freedom to move backwards. Thanks to this backward movement, the head of a user 11 moves towards the headrest 4 (Figure 4) limiting the so-called "whiplash" effect.

Figure 5 is a schematic illustration of an alternative embodiment of the assembly 29, in which, whenever possible, the same reference numbers used in Figure 3 have been used to indicate the components. Unlike the solution in Figure 3, the elements 49 of the arms 48 are fixed to the ends 34 of the wire sections 33. At the same time, the ends 43 of the sheaths 32 are connected in fixed positions in relation to the uprights 9, and the cores slide through respective holes (not illustrated) provided in the uprights 9.

Figures 6 to 9 show a further embodiment, in which, whenever possible, the same reference numbers used in Figures 1 to 3 have been used to indicate the components. The device 42 is replaced by a connecting device 52, which comprises: a horizontal guideway 53 fixed to the surface 27; and two slides 54 comprising respective end portions 55 which slidingly engage the guideway 53. At the opposite end, the slides 54 comprise respective portions 56 which are outside the guideway 53 and each of which is fixed to a relative end 43 to form the points of attachment of the sheaths 32. Two springs 57 exert a returning action on the portions 55 to bring the slides 54 towards one another in a backward reference position. Meanwhile, a retaining member 58 passes through a slit 59 in the guideway 53 and engages the slides 54 to releasably hold said slides 54 in the reference position.

In case of a vehicle collision from the rear, the longitudinal inertial force of the user 11 against the surface 25 tensions the wire sections 33. When the elasticity of the member 58 and of the springs 57 is overcome, the slides 54 slide to move the ends 43 away and, thus, leave the plate 13 free to move backwards. The slides 54 may be flexible, so that the part of the slides 54 outside the guideway 53 can bend elastically towards the surface 27 during the backward movement of the plate 13.

From the above description it is clear that it is possible to limit the "whiplash" effect when the head of a user 11 is moved closer to the headrest 4 by means of a safety system that is automatically activated and is extremely simple, in that said system is incorporated in the assembly 29 without the need for any dedicated devices.

In particular, when the device 12 reaches the assembly line of the seat 1, it is already provided with the safety system, which means no dedicated assembly operations are necessary. Using the solution described herein it possible to obtain an efficient safety system by making slight modifications to Bowden cable adjustment assemblies of the known type, which thus involves limited costs, without compromising the normal method of adjustment.

The solution in Figures 1 to 3 allows each of the wire sections 33 to be slackened by around 40 mm, using an extremely limited space between the ribs 28. Moreover, the safety system is not activated during normal running conditions, due to the action of the spring 50, but also because the rocker arm 45 only moves to the end-of-travel position after exceeding the dead center position described above.

Furthermore, there is not usually any damage to the backrest 1, thanks to the returning function of the springs 50 and 57, which means there are no repair costs after a rear collision of the vehicle.

Mounting the device 12 on the frame 6 is extremely simple and fast, thanks to the reduced number of points of attachment.

Furthermore, the width and shape of the surface 25 are suitable to support the scapular region of the back as well, and not only the lumbosacral region.

Lastly, it is clear that modifications and variations may be made to the backrest 1 and to the device 12 described and illustrated herein without departing from the scope of the present invention, as set forth in the appended claims.

For example, the supporting member 13 may have a different shape, and/or consist of different parts and a different number of parts with respect to that described by way of example, and/or have different areas of flexibility.

Moreover, there may be a single sheath for both wire sections 33.

The safety system that is described, which allows the ends 34 of the wire sections 33 or the ends 43 of the sheaths 32 freedom to translate, may be associated to the frame 6, in particular to the uprights 9, provided there is sufficient space available, instead of or together with the device 42 or 52, which is instead associated to the surface 27.

Moreover, there may be two separate lever arms instead of the rocker arm 45; and/or two separate guideways instead of a single guideway 53.

For the solution in Figures 6 and 7, the member 58 may be absent, if the retaining function is only performed by the springs 57; and/or the slides 54 may be connected to the ends 34 of the wire sections 33, with the ends 43 connected to the uprights 9.

Furthermore, the wire sections 33 may be guided and support the plate 13 via different guideways, or guideways arranged in a different position, with respect to the cable guides 35.

## Claims

1. Backrest (1) of a vehicle seat (2), said backrest comprising a frame (6) and a lumbar supporting device (12) comprising:
- a supporting member (13) attached to said frame (6) and defining a rear surface (27) and a front surface (25), which is shaped to support a portion of a user's back (11);
- a Bowden cable adjustment assembly (29) for adjusting the shape and/or position of said front surface (25); said assembly comprising:
a) at least one sheath (32) having one end (43) connected to a first element (27) defined by one of either said frame or said rear surface;
b) two wire sections (33) arranged outside said sheath (32) and having respective ends (34) connected to a second element (6) defined by the other of either said frame or said rear surface;
c) a control device (37) that can be operated by the user to pull/release said wire sections (33) with respect to said sheath (32) ;
- connecting means (42) to movably connect the end (43) of said sheath (32) to said first element (27) and/or the ends of said wire sections (33) to said second element (6);
**characterized in that** said connecting means:
- give a freedom of movement to the end (43) of said sheath (32) in relation to said first element (27) and/or to the ends of said wire sections (33) in relation to said second element (6) starting from a reference position, such as to enable said supporting member (13) to move backwards, in use, in response to a longitudinal inertial force acting against said front surface (25), and
- comprise retaining means to hold, in said reference position, the end (43) of said sheath (32) in relation to said first element (27) and/or the ends of said wire sections (33) in relation to said second element (6) until said longitudinal inertial force exceeds a previously defined threshold value.

2. Backrest according to claim 1, **characterized by** comprising elastic means (50) to make the end (43) of said sheath (32) and/or the ends of said wire sections (33) return to their original reference position when said longitudinal inertial force is no longer applied.

3. Backrest according to claim 2, **characterized in that** said retaining means are defined by said elastic means (50).

4. Backrest according to any of the previous claims, **characterized in that** said connecting means (42) define an end-of-travel position of the end (43) of said sheath (32) in relation to said first element (27) and/or of the ends of said wire portions (33) in relation to said second element (6).

5. Backrest according to any of the previous claims, **characterized in that** said connecting means (42) comprise at least one lever arm (48) pivotally connected to said first or second element.

6. Backrest according to any of the previous claims, **characterized in that** said Bowden cable adjustment assembly comprises two Bowden cables (30) comprising:
- respective sheaths (32) having respective ends (43) which are separate and connected to said first element (27); and
- respective cores that are slidable in relation to the corresponding sheaths (32); said wire sections (33) forming part of said cores.

7. Backrest according to claim 6, **characterized in that** said connecting means (42) comprise a rocker arm (45) comprising:
- a central portion (46) pivotally connected to an intermediate portion (18) of said rear surface (27), and
- two opposite lever arms (48) attached, respectively, to the ends (43) of said sheaths (32) or the ends (34) of said wire sections (33).

8. Backrest according to claim 6, **characterized in that** said connecting means (52) comprise:
- guiding means (53) fixed in relation to said rear surface (27); and
- two slides (54) slidingly connected to said guiding means (53) and attached, respectively, to the ends (43) of said sheaths (32) or the ends (34) of said wire sections (33).

9. Backrest according to any of the previous claims, **characterized by** comprising two cable guides (35) attached to said rear surface (27) in fixed positions and slidingly engaged, respectively, by said wire sections (33).

10. Backrest according to claim 9, **characterized in that** said cable guides (35) lie on a same plane and are symmetrical with respect to a longitudinal vertical center-line plane.

11. Lumbar supporting device (12) for obtaining a backrest according to any of the previous claims; said lumbar supporting device comprising:
- a supporting member (13) defining a rear surface (27) and a front surface (25), which is shaped to support a portion of a user's back (11);
- a Bowden cable adjustment assembly (29) for adjusting the shape and/or position of said front surface (25); said assembly comprising:
a) at least one sheath (32);
b) two wire sections (33) arranged outside said sheath (32);
c) a control device (37) that can be operated by a user (11) to pull/release said wire sections (33) in relation to said sheath (32);
d) connecting means (42,52) to movably connect an end of said wire sections (34) or of said sheath (32) to said rear surface (27);
**characterized in that** said connecting means (42):
- give a freedom of movement to said end (43) starting from a reference position, such as to enable said supporting member (13) to move backwards, in use, in response to a longitudinal inertial force acting against said front surface (25) and in relation to a frame (6) of said backrest (1), and
- comprise retaining means to hold, in said reference position, said end (43) in relation to said rear surface (27) until said longitudinal inertial force exceeds a previously defined threshold value.

12. Device according to claim 11, **characterized by** comprising elastic means (50) to make said end (43) return to its original reference position when said longitudinal inertial forceis no longer applied.

13. Device according to claim 12, **characterized in that** said retaining means are defined by said elastic means (50).

## Patentansprüche

1. Rückenlehne (1) eines Fahrzeugsitzes (2), wobei die Rückenlehne einen Rahmen (6) und eine Lendenstützvorrichtung (12) aufweist, die aufweist:
- ein Stützteil (13), das am Rahmen (6) befestigt ist und eine Rückfläche (27) und eine Vorderfläche (25) definiert, die so geformt ist, dass sie einen Abschnitt des Rückens eines Benutzers (11) abstützt;
- eine Bowdenzug-Einstellanordnung (29) zum Einstellen der Form und/oder Position der Vorderfläche (25); wobei die Anordnung aufweist:
a) mindestens einen Mantel (32) mit einem Ende (43), das mit einem ersten Element (27) verbunden ist, das durch eine Komponente aus Rahmen und Rückfläche definiert ist;
b) zwei Drahtteilstücke (33), die außerhalb des Mantels (32) angeordnet sind und jeweilige Enden (34) haben, die mit einem zweiten Element (6) verbunden sind, das durch die andere Komponente aus Rahmen und Rückfläche definiert ist;
c) eine Steuervorrichtung (37), die vom Benutzer bedient werden kann, um an den Drahtteilstücken (33) im Hinblick auf den Mantel (32) zu ziehen/sie zu lösen;
- eine Verbindungseinrichtung (42), um das Ende (43) des Mantels (32) mit dem ersten Element (27) und/oder die Enden der Drahtteilstücke (33) mit dem zweiten Element (6) zu verbinden;
**dadurch gekennzeichnet, dass** die Verbindungseinrichtung:
- dem Ende (43) des Mantels (32) in Relation zum ersten Element (27) und/oder den Enden der Drahtteilstücke (33) in Relation zum zweiten Element (6) beginnend von einer Referenzposition eine Bewegungsfreiheit gibt, so dass sich das Stützbauteil (13) im Gebrauch als Reaktion auf eine auf die Vorderfläche (25) wirkende Längsträgheitskraft nach hinten bewegen kann, und
- eine Halteeinrichtung aufweist, um in der Referenzposition das Ende (43) des Mantels (32) in Relation zum ersten Element (27) und/oder die Enden der Drahtteilstücke (33) in Relation zum zweiten Element (6) zu halten, bis die Längsträgheitskraft einen vorab definierten Schwellwert übersteigt.

2. Rückenlehne nach Anspruch 1, **dadurch gekennzeichnet, dass** sie eine elastische Einrichtung (50) aufweist, um das Ende (43) des Mantels (32) und/oder die Enden der Drahtteilstücke (33) in ihre ursprüngliche Referenzposition zurückkehren zu lassen, wenn die Längsträgheitskraft nicht mehr ausgeübt wird.

3. Rückenlehne nach Anspruch 2, **dadurch gekennzeichnet, dass** die Halteeinrichtung durch die elastische Einrichtung (50) definiert ist.

4. Rückenlehne nach einem der vorstehenden Ansprüche, **dadurch gekennzeichnet, dass** die Verbindungseinrichtung (42) eine Endlagenposition des Endes (43) des Mantels (32) in Relation zum ersten Element (27) und/oder der Enden der Drahtteilstücke (33) in Relation zum zweiten Element (6) definiert.

5. Rückenlehne nach einem der vorstehenden Ansprüche, **dadurch gekennzeichnet, dass** die Verbindungseinrichtung (42) mindestens einen Hebelarm (48) aufweist, der mit dem ersten oder zweiten Element schwenkbar verbunden ist.

6. Rückenlehne nach einem der vorstehenden Ansprüche, **dadurch gekennzeichnet, dass** die Bowdenzug-Einstellanordnung zwei Bowdenzüge (30) aufweist, die aufweisen:
- jeweilige Mäntel (32) mit jeweiligen Enden (43), die getrennt und mit dem ersten Element (27) verbunden sind; und
- jeweilige Kerne, die in Relation zu den entsprechenden Mänteln (32) gleitfähig sind; wobei die Drahtteilstücke (33) Teil der Kerne bilden.

7. Rückenlehne nach Anspruch 6, **dadurch gekennzeichnet, dass** die Verbindungseinrichtung (42) einen Kipphebel (45) aufweist, der aufweist:
- einen Mittelabschnitt (46), der mit einem Zwischenabschnitt (18) der Rückfläche (27) schwenkbar verbunden ist, und
- zwei entgegengesetzte Hebelarme (48), die jeweils an den Enden (43) der Mäntel (32) oder den Enden (34) der Drahtteilstücke (33) befestigt sind.

8. Rückenlehne nach Anspruch 6, **dadurch gekennzeichnet, dass** die Verbindungseinrichtung (52) aufweist:
- eine Führungseinrichtung (53), die in Relation zur Rückfläche (27) feststehend ist; und
- zwei Gleitstücke (54), die mit der Führungseinrichtung (53) gleitend verbunden und jeweils an den Enden (43) der Mäntel (32) oder den Enden (34) der Drahtteilstücke (33) befestigt sind.

9. Rückenlehne nach einem der vorstehenden Ansprüche, **dadurch gekennzeichnet, dass** sie zwei Zugführungen (35) aufweist, die an der Rückfläche (27) in festen Positionen befestigt sind und mit denen die Drahtteilstücke (33) jeweils einen gleitenden Eingriff herstellen.

10. Rückenlehne nach Anspruch 9, **dadurch gekennzeichnet, dass** die Zugführungen (35) auf einer Ebene liegen und im Hinblick auf eine längs verlaufende senkrechte Mittellinienebene symmetrisch sind.

11. Lendenstützvoruchtung (12) zum Erhalten einer Rückenlehne nach einem der vorstehenden Ansprüche; wobei die Lendenstützvorrichtung aufweist:
- ein Stützteil (13), das eine Rückfläche (27) und eine Vorderfläche (25) definiert, die so geformt ist, dass sie einen Abschnitt des Rückens eines Benutzers (11) abstützt;
- eine Bowdenzug-Einstellanordnung (29) zum Einstellen der Form und/oder Position der Vorderfläche (25); wobei die Anordnung aufweist:
a) mindestens einen Mantel (32);
b) zwei Drahtteilstücke (33), die außerhalb des Mantels (32) angeordnet sind;
c) eine Steuervorrichtung (37), die von einem Benutzer (11) bedient werden kann, um an den Drahtteilstücken (33) in Relation zum Mantel (32) zu ziehen/sie zu lösen;
d) eine Verbindungseinrichtung (42, 52), um ein Ende der Drahtteilstücke (34) oder des Mantels (32) mit der Rückfläche (27) beweglich zu verbinden;
**dadurch gekennzeichnet, dass** die Verbindungseinrichtung (42):
- dem Ende (43) beginnend von einer Referenzposition eine Bewegungsfreiheit gibt, so dass sich das Stützteil (13) im Gebrauch als Reaktion auf eine auf die Vorderfläche (25) wirkende Längsträgheitskraft und in Relation zu einem Rahmen (6) der Rückenlehne (1) nach hinten bewegen kann, und
- eine Halteeinrichtung aufweist, um in der Referenzposition das Ende (43) in Relation zur Rückfläche (27) zu halten, bis die Längsträgheitskraft einen vorab definierten Schwellwert übersteigt.

12. Vorrichtung nach Anspruch 11, **dadurch gekennzeichnet, dass** sie eine elastische Einrichtung (50) aufweist, um das Ende (43) in seine ursprüngliche Referenzposition zurückkehren zu lassen, wenn die Längsträgheitskraft nicht mehr ausgeübt wird.

13. Vorrichtung nach Anspruch 12, **dadurch gekennzeichnet, dass** die Halteeinrichtung durch die elastische Einrichtung (50) definiert ist.

## Revendications

1. Dossier (1) d'un siège (2) de véhicule, ledit dossier comprenant un cadre (6) et un dispositif de support lombaire (12) comprenant :
- un élément de support (13) fixé audit cadre (6) et définissant une surface arrière (27) et une surface avant (25), qui est façonné pour supporter une partie du dos d'un utilisateur (11) ;
- un ensemble de réglage de câble Bowden (29) destiné à régler la forme et/ou la position de ladite surface avant (25) ; ledit ensemble comprenant :
a) au moins une gaine (32) ayant une extrémité (43) reliée à un premier élément (27) défini par ledit cadre ou par ladite surface arrière ;
b) deux sections de fil (33) agencées à l'extérieur de ladite gaine (32) et ayant des extrémités respectives (34) reliées à un second élément (6) défini par l'autre parmi ledit cadre et ladite surface arrière ;
c) un dispositif de commande (37) qui peut être utilisé par l'utilisateur pour tirer/relâcher lesdites sections de fil (33) par rapport à ladite gaine (32) ;
- un moyen de liaison (42) pour relier de façon mobile l'extrémité (43) de ladite gaine (32) audit premier élément (27) et/ou les extrémités desdites sections de fil (33) audit second élément (6) ;
**caractérisé en ce que** ledit moyen de liaison :
- donne une liberté de déplacement à l'extrémité (43) de ladite gaine (32) par rapport audit premier élément (27) et/ou aux extrémités desdites sections de fil (33) par rapport audit second élément (6) à partir d'une position de référence, de manière à permettre audit élément de support (13) de reculer, lors de l'utilisation, en réponse à une force d'inertie longitudinale agissant contre ladite surface avant (25), et
- comprend un moyen de retenue pour maintenir, dans ladite position de référence, l'extrémité (43) de ladite gaine (32) par rapport audit premier élément (27) et/ou les extrémités desdites sections de fil (33) par rapport audit second élément (6) jusqu'à ce que ladite force d'inertie longitudinale dépasse une valeur seuil préalablement définie.

2. Dossier selon la revendication 1, **caractérisé en ce qu'**il comprend un moyen élastique (50) pour amener l'extrémité (43) de ladite gaine (32) et/ou les extrémités desdites sections de fil (33) à revenir dans leur position de référence d'origine lorsque ladite force d'inertie longitudinale n'est plus appliquée.

3. Dossier selon la revendication 2, **caractérisé en ce que** ledit moyen de retenue est défini par ledit moyen élastique (50).

4. Dossier selon l'une quelconque des revendications précédentes, **caractérisé en ce que** ledit moyen de liaison (42) définit une position de fin de déplacement de l'extrémité (43) de ladite gaine (32) par rapport audit premier élément (27) et/ou des extrémités desdites parties de fil (33) par rapport audit second élément (6).

5. Dossier selon l'une quelconque des revendications précédentes, **caractérisé en ce que** ledit moyen de liaison (42) comprend au moins un bras de levier (48) relié de manière pivotante audit premier ou second élément.

6. Dossier selon l'une quelconque des revendications précédentes, **caractérisé en ce que** ledit ensemble de réglage de câble Bowden comprend deux câbles Bowden (30) comprenant :
- des gaines respectives (32) ayant des extrémités respectives (43) qui sont séparées et reliées audit premier élément (27) ; et
- des âmes respectives qui peuvent coulisser par rapport aux gaines correspondantes (32) ; lesdites sections de fil (33) faisant partie desdites âmes.

7. Dossier selon la revendication 6, **caractérisé en ce que** ledit moyen de liaison (42) comprend un bras oscillant (45) comprenant :
- une partie centrale (46) reliée de manière pivotante à une partie intermédiaire (18) de ladite surface arrière (27), et
- deux bras de levier opposés (48) fixés, respectivement, aux extrémités (43) desdites gaines (32) ou aux extrémités (34) desdites sections de fil (33).

8. Dossier selon la revendication 6, **caractérisé en ce que** ledit moyen de liaison (52) comprend :
- un moyen de guidage (53) fixé par rapport à ladite surface arrière (27) ; et
- deux coulisseaux (54) reliés de manière coulissante audit moyen de guidage (53) et fixés, respectivement, aux extrémités (43) desdites gaines (32) ou aux extrémités (34) desdites sections de fil (33).

9. Dossier selon l'une quelconque des revendications précédentes, **caractérisé en ce qu'**il comprend deux guides de câble (35) fixés à ladite surface arrière (27) dans des positions fixes et mis en prise coulissante, respectivement, par lesdites sections de fil (33).

10. Dossier selon la revendication 9, **caractérisé en ce que** lesdits guides de câble (35) se trouvent sur un même plan et sont symétriques par rapport à un plan de ligne médiane vertical longitudinal.

11. Dispositif de support lombaire (12) destiné à obtenir un dossier selon l'une quelconque des revendications précédentes ; ledit dispositif de support lombaire comprenant :
- un élément de support (13) définissant une surface arrière (27) et une surface avant (25), qui est façonné pour supporter une partie du dos d'un utilisateur (11) ;
- un ensemble de réglage de câble Bowden (29) destiné à régler la forme et/ou la position de ladite surface avant (25) ; ledit ensemble comprenant :
a) au moins une gaine (32) ;
b) deux sections de fil (33) agencées à l'extérieur de ladite gaine (32) ;
c) un dispositif de commande (37) qui peut être utilisé par un utilisateur (11) pour tirer/relâcher lesdites sections de fil (33) par rapport à ladite gaine (32) ;
d) un moyen de liaison (42, 52) pour relier de façon mobile une extrémité desdites sections de fil (34) ou de ladite gaine (32) à ladite surface arrière (27) ;
**caractérisé en ce que** ledit moyen de liaison (42) :
- donne une liberté de déplacement à ladite extrémité (43) à partir d'une position de référence, de manière à permettre audit élément de support (13) de reculer, lors de l'utilisation, en réponse à une force d'inertie longitudinale agissant contre ladite surface avant (25) et par rapport à un cadre (6) dudit dossier (1), et
- comprend un moyen de retenue pour maintenir, dans ladite position de référence, ladite extrémité (43) par rapport à ladite surface arrière (27) jusqu'à ce que ladite force d'inertie longitudinale dépasse une valeur seuil préalablement définie.

12. Dispositif selon la revendication 11, **caractérisé en ce qu'**il comprend un moyen élastique (50) pour amener ladite extrémité (43) à revenir à sa position de référence d'origine lorsque ladite force d'inertie longitudinale n'est plus appliquée.

13. Dispositif selon la revendication 12, **caractérisé en ce que** ledit moyen de retenue est défini par ledit moyen élastique (50).
